(19) Europäisches Patentamt
European Patent Office
Office européen des brevets

(11) **EP 4 607 812 A1**

(12) **EUROPEAN PATENT APPLICATION**
published in accordance with Art. 153(4) EPC

(43) Date of publication:
**27.08.2025 Bulletin 2025/35**

(21) Application number: **23910245.2**

(22) Date of filing: **18.12.2023**

(51) International Patent Classification (IPC):
**H04B 7/0456** (2017.01)

(52) Cooperative Patent Classification (CPC):
**H04B 7/0456; H04B 7/06**

(86) International application number:
**PCT/CN2023/139647**

(87) International publication number:
**WO 2024/140315 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2022 CN 202211697546**

(71) Applicant: **ZTE Corporation
Shenzhen, Guangdong 518057 (CN)**

(72) Inventors:
• **JIAN, Mengnan
  Shenzhen, Guangdong 518057 (CN)**

• **CHEN, Yijian
  Shenzhen, Guangdong 518057 (CN)**
• **YU, Hongkang
  Shenzhen, Guangdong 518057 (CN)**
• **ZHANG, Shujuan
  Shenzhen, Guangdong 518057 (CN)**
• **SI, Yuan
  Shenzhen, Guangdong 518057 (CN)**
• **WANG, Yunlu
  Shenzhen, Guangdong 518057 (CN)**
• **SUN, Yunqi
  Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **CHANNEL INFORMATION FEEDBACK METHOD, APPARATUS, AND STORAGE MEDIUM**

(57) Embodiments of the present application relate to the technical field of communications, and provide a channel information feedback method, an apparatus, and a storage medium, for use in satisfying the requirements of precoding performance and communication quality in different scenarios. The channel information feedback method comprises: acquiring channel information; according to the channel information, determining a target codeword from a codebook set corresponding to the channel information, wherein the codebook set comprises a plurality of codewords, and each codeword is composed of one or more codeword blocks; and sending an indication parameter of the target codeword.

FIG. 2

**EP 4 607 812 A1**

**Description**

The present disclosure claims a priority of Chinese Patent Application No. 202211697546.8, filed on December 28, 2022, the entire content of which is incorporated into the present application by reference.

TECHNICAL FIELD

The present disclosure relates to the field of communication technologies, and in particular to a channel information feedback method, an apparatus, and a storage medium.

BACKGROUND

Massive multiple-input multiple-output (MIMO) is one of key technologies for the 5th generation (5G) wireless communication system and the upcoming 6th generation (6G) wireless communication system. A precoding technology is usually used in an MIMO system to improve a channel state, so as to enhance an effect of spatial multiplexing. In the precoding technology, a precoding matrix that matches with a channel is used to process a data stream for the spatial multiplexing, thereby achieving precoding for the channel. Therefore, the implementation of the precoding technology requires a terminal to use a codebook to feed back accurate channel information to a network device.

With the development and advancement of wireless communication technologies, currently, there is an increasing demand for an array with large-scale unit antennas or elements, and there are more and more near-field communication scenarios in actual implementations. However, current codebook designs generally focus only on a parameter in a single angular dimension, and cannot satisfy the requirements for precoding performance and communication quality in the near-field communication scenarios.

SUMMARY

The present disclosure provides a channel information feedback method, an apparatus and a storage medium, which may satisfy the requirements for precoding performance and communication quality in different scenarios.

To achieve the above-mentioned objectives, the present disclosure adopts the following technical solutions.

In a first aspect, the embodiments of the present disclosure provide a channel information feedback method, and the method includes:

acquiring channel information;
determining a target codeword from a codebook set indicated by the channel information, according to the channel information, where the codebook set includes a plurality of codewords, each codeword consists of one or more codeword blocks; and
transmitting an indication parameter of the target codeword.

In a second aspect, the embodiments of the present disclosure further provide a communication apparatus, and the apparatus includes:

a transceiving module, configured to acquire channel information;
a processing module, configured to determine a target codeword from a codebook set indicated by the channel information, according to the channel information, where the codebook set includes a plurality of codewords, and each codeword consists of one or more codeword blocks;
the transceiving module, further configured to transmit an indication parameter of the target codeword.

In a third aspect, the embodiments of the present disclosure further provide a communication apparatus, and the communication apparatus includes:

a memory and a processor; where the memory and the processor are coupled with each other; the memory is configured to store a computer program; the processor, when executing the computer program, implements the method provided by the above first aspect.

In a fourth aspect, the embodiments of the present disclosure further provide a computer readable storage medium, the computer readable storage medium has stored computer instructions thereon, and the computer instructions, when executed on an electronic device, cause the electronic device to perform the method provided by the above first aspect.

In a fifth aspect, the embodiments of the present disclosure further provide a computer program product including computer program instructions, and the computer program instructions, when executed by a processor, implement the method provided by the above first aspect.

Based on the channel information feedback method provided by the embodiments of the present disclosure, the codebook in the codebook set may be determined by considering the codebook forms corresponding to different near-field parameters, and the idea of a multi-domain codebook design is adopted, and includes a plurality of codebook forms defined based on parameters in different domains, so in the scenario of near-field communication, the relation between changes of the phase of the codeword element and the antenna index may also be reflected accurately, and the channel information is fed back accurately, so that the codebook set may satisfy the requirements for precoding performance and communication quality in different scenarios.

BRIEF DESCRIPTION OF THE DRAWINGS

The drawings are used to provide a further understanding for the technical solutions of the present disclosure, constitute a part of the specification, are used to explain the technical solutions of the present disclosure in conjunction with the embodiments of the present disclosure, and do not constitute a limitation on the technical solutions of the present disclosure.

FIG. 1 is an architecture schematic diagram of a communication system, provided by the present disclosure.
FIG. 2 is a method flowchart of a channel information feedback method, provided by the embodiments of the present disclosure.
FIG. 3 is a structural schematic diagram of a communication apparatus, provided by the embodiments of the present disclosure.
FIG. 4 is a structural schematic diagram of a communication apparatus, provided by the embodiments of the present disclosure.

DETAILED DESCRIPTION

The technical solutions in the embodiments of the present disclosure will be described clearly and completely below in conjunction with the drawings in the embodiments of the present disclosure, and it is obvious that the described embodiments are only a part of the embodiments of the present disclosure, but not all of the embodiments. Based on the embodiments in the present disclosure, all other embodiments obtained by those ordinary skilled without creative efforts shall fall within the protection scope of the present disclosure.

It should be noted that all directional indications (such as upper, lower, left, right, front, back, etc.) in the embodiments of the present disclosure are only used to explain relative positional relationships, movements, etc., of various components under a specific posture (as shown in the drawings), and if the specific posture changes, the directional indications also change accordingly.

The terms "first" and "second", etc., are used for descriptive purposes only, but cannot be understood as indicating or implying relative importance or implicitly specifying the number of the indicated technical features. Thus, features defined with "first" or "second", etc., may explicitly or implicitly include one or more such features. In the description of the present disclosure, unless otherwise specified, "multiple / a/the plurality of" means two or more.

In the description of the present disclosure, it should be noted that, unless explicitly specified or limited, the terms "interconnected" or "connected / coupled" should be understood broadly, and for example, they may refer to a fixed connection, a detachable connection, or an integral connection. Those ordinary skilled in the art may understand the specific meanings of the above terms in the present disclosure in specific cases. Additionally, when describing a pipeline, the terms "interconnected" or "connected / coupled" in the present disclosure means conduction. The specific meaning should be understood in conjunction with the context.

In the embodiments of the present disclosure, the words, such as "exemplary / exemplarily" or "for example", are used to represent an example, an illustration or an explanation. Any embodiment or design solution described with "exemplary / exemplarily" or "for example" in the embodiments of the present disclosure should not be construed as preferred or advantageous over other embodiments or design solutions. Rather, the usage of the words, such as "exemplary / exemplarily" or "for example", is intended to present relevant concepts in a specific manner.

A large quantity of antennas need to be deployed in a massive MIMO system, to enhance a spectrum and an energy efficiency of an entire radio channel. A large quantity of antenna units and transceiving units may be included in an antenna (antennas) deployed by a base station. For example, a number of antenna units and a number of transceiving units may each be 128, 256 or 512. An antenna array consisting of a large quantity of antenna units may also be configured in a terminal. Also, in the sixth generation mobile communication technology, a concept of ultra-large-scale MIMO is proposed, and the number of antennas in the base station is further increased. In addition, an intelligent metasurface (a reconfigurable intelligent surface), as a possible new technology for the sixth generation mobile communication technology (6G), may have units with the number up to thousands or even tens of thousands in the technology, and also face the problems of a change in channel characteristics and of a change in transmission designs caused by the extremely large number of units.

Generally speaking, in a 5G communication system, a transmitting end and a receiving end may adopt and support a transmission scheme based on a codebook. The transmitting end and the receiving end (e.g., a base station and a terminal device) may be pre-configured with a plurality of codebooks, each codebook of which contains a plurality of precoding matrices, then may determine, by a selected codebook, a precoding matrix contained in the codebook, and adopt the precoding matrix finally determined in the codebook for a data transmission. During a communication process, the base station may determine a codebook parameter required to be adopted for communicating with the terminal, according to a sounding reference signal resource reported by the terminal, and notify the determined codebook parameter to the terminal. Then, the terminal determines a corresponding codebook according to the codebook parameter notified by the base station.

Currently, a discrete Fourier transform (Discrete Fourier Transform, DFT) codebook is usually designed based on a far-field channel, and it does not consider an impact of the increasing in the number of antenna array elements on a channel model. Based on this codebook, deterioration of near-field transmission performance will be caused, channel estimation quality and system capacity will be affected, and a communication requirement cannot be satisfied. Therefore, the codebook is usually insufficient to support the near-field communication requirement.

In view of this, the present disclosure provides a channel information feedback method, the method includes: acquiring channel information; determining a target codeword in a codebook set according to the channel information, where the codebook set includes a plurality of codewords, each codeword of which consists of one or more codeword blocks; transmitting a feedback message, where the feedback message includes an indication parameter of the target codeword. Herein, the codebook in the above codebook set may be determined by considering the codebook forms corresponding to different near-field parameters, and the idea of a multi-domain codebook design is adopted, and includes a plurality of codebook forms defined based on parameters in different domains, so as to satisfy the requirements of precoding performance and communication quality in different scenarios.

The implementations of the embodiments of the present disclosure are described in detail below in conjunction with the drawings.

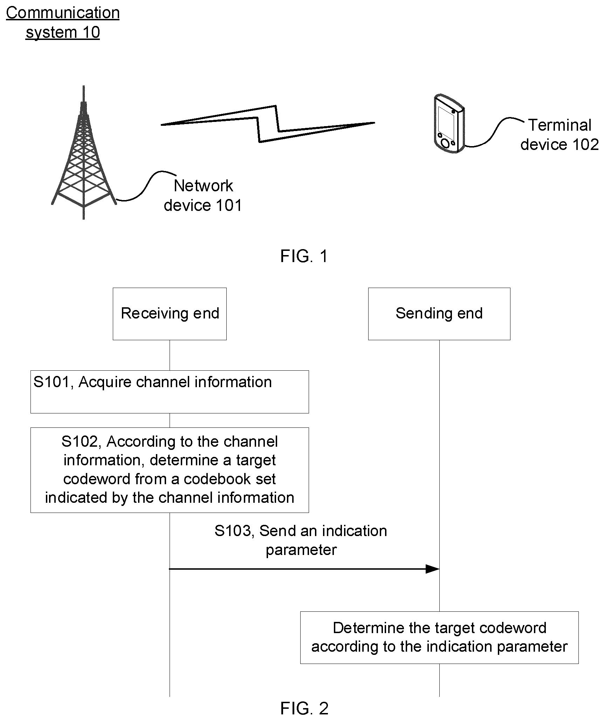

The method provided in the embodiments of the present disclosure may be applied to various communication systems. For example, the communication system may be a long term evolution (LTE) system, a 5th generation (5G) communication system, a Wireless Fidelity (Wi-Fi) system, a 3rd generation partnership project (3GPP)-related communication system, a future evolved communication system (e.g., a 6th generation (6G) communication system, etc.), or a system integrating multiple systems, etc., which is not limited thereto. The following takes a communication system 10 shown in FIG. 1 as an example, to describe the method provided in the embodiments of the present disclosure. FIG. 1 is merely a schematic diagram and does not constitute a limitation on the applicable scenarios of the technical solutions provided in the present disclosure.

As shown in FIG. 1, FIG. 1 is a schematic diagram of an architecture of a communication system 10 provided in the embodiments of the present disclosure. In FIG. 1, the communication system 10 may include a network device 101 and a terminal device 102 that communicates with the network device 101.

In FIG. 1, the network device 101 may provide a radio access service for the terminal(s). Specifically, a network device provides a service coverage area (also referred to as a cell). A terminal device entering this area may communicate with the base station by a radio signal, to receive a radio access service provided by the base station. In addition, the service coverage area of the network device may also be classified into a near-field area and a far-field area. The terminal device may be located within the near-field range or the far-field range.

In some embodiments, the network device 101 in the embodiments of the present disclosure may be any one type of device with a radio transceiving function. For example, the network device 101 may be a base station (evolution nodeB, eNB), a next generation base station (generation nodeB, gNB), a receiving and transmitting point (transmission receive point, TRP), a transmission point (TP), and a certain type of other access node. According to a size of the provided service coverage area, the base station may be classified into a macro base station for providing a macro cell (Macro cell), a micro base station for providing a pico cell (Pico cell) and a femto base station for providing a femto cell (Femto cell). With the continuous evolution of wireless communication technologies, other names for future base stations may be also adopted.

In some embodiments, the terminal device 102 in the embodiments of the present disclosure may be any type of device with a radio transceiving function. For example, the terminal device is a handheld device with a radio communication function (e.g., a mobile phone or a tablet computer), a vehicle-mounted device, a wearable device, a terminal device or a computing device in an internet of things (IoT) system, etc. The terminal device may also be referred to as a terminal or a user equipment (UE), which is not limited thereto.

The communication system 10 shown in FIG. 1 is only used as an example and is not used to limit the technical solutions of the present disclosure. Those skilled in the art should understand that, in the specific implementation process, the communication system 10 may further include other devices, and meanwhile, the number of network devices and the number of terminal devices may also be determined according to specific needs, which is not limited thereto.

FIG. 2 is a schematic flowchart of a channel information feedback method provided in the embodiments of the present disclosure. Exemplarily, the channel information feedback method provided in the present disclosure may be applied to the application environment shown in FIG. 1.

As shown in FIG. 2, the channel information feedback method provided in the present disclosure may include specifically the following contents.

S101, a receiving end acquires channel information.

The receiving end mentioned above may be the network device 101 or the terminal device 102 in the communication system 10 shown in FIG. 1. In a communication process, if the network device 101 transmits data to the terminal device 102 and the terminal device 102 receives the data sent by the network device 101, the terminal device 102 may be referred to as a receiving end. Accordingly, the network device 101 is a transmitting end.

In some embodiments, the receiving end may perform channel measurement to acquire the channel information. Exemplarily, the transmitting end may transmit a pilot signal to the receiving end, for example, the pilot signal is a channel state information-reference signal (CSI-RS). Based on the pilot signal, the receiving end may perform the channel measurement at a resource position of the receiving end located relative to the transmitting end, to acquire the channel information. The specific process for the channel measurement may refer to the related art, which will be not repeated in detail in the embodiments of the present disclosure.

In some embodiments, the channel information mentioned above may be in a form of a matrix/vector.

S102, the receiving end determines, according to the channel information, a target codeword from a codebook set indicated by the channel information.

Herein, the codebook set includes a plurality of codewords, and each codeword of which consists of one or more codeword blocks. Also, each of the codewords is in a form of a matrix/vector, and the target codeword is used to characterize the channel information of the communication process.

It should be noted that, in the communication process, the receiving end and the transmitting end may pre-agree on a same codebook set, or may have a same codeword generation model to generate the codebook set. After acquiring the channel information, the receiving end may determine the target codeword from a pre-agreed codeword set based on the channel information.

In some embodiments, each of the codewords consists of one or more codeword blocks, and each of the codewords is in a form of a matrix/vector, and then, a codeword block may also be in a form of a matrix/vector.

Exemplarily, assuming that a codeword $V$ includes a codeword block $G$ and a codeword block $G'$, a codeword form of the codeword $V$ may be represented by the following Formula (1) or Formula (2):

$$V = \begin{bmatrix} G & G' \\ jG & -jG' \end{bmatrix}$$ Formula (1),

where $j$ is a preset constant;

$$V = \begin{bmatrix} G & G' & G \\ G & G' & -G \end{bmatrix}$$ Formula (2).

In some embodiments, at least one codeword element of at least one codeword in the codeword set is determined according to a high-order polynomial of an antenna index.

Herein, the polynomial is an algebraic expression consisting of the adding of several monomials. Each of the monomials includes a variable and/or a coefficient, and the order of the monomial is determined by an order of the variable in the monomial. An order of the polynomial is determined by a highest order of monomials in the polynomial. For example, the polynomial includes a linear monomial and a quadratic monomial, and then, the polynomial is a quadratic polynomial. In addition, the high-order polynomial refers to a polynomial with an order greater than 1, such as a quadratic polynomial or a cubic polynomial.

Exemplarily, a codeword block $G$ may be $G = [G_{n_1}\ G_{n_2}\ \cdots\ G_{n_N}]$, where $G_{n_1}$, $G_{n_2}$ ...... $G_{n_N}$ each are codeword elements in the codeword block $G$, that is, $G_{n_1}$, $G_{n_2}$ ...... $G_{n_N}$ may be determined according to the high-order polynomial of the antenna index.

In some possible embodiments, the above codeword element satisfies any one of the following Formula (3), Formula (4) or Formula (5):

$$G_n = p_n \exp\left( j2\pi \left( a_0 + an + bn^2 \right) \right)$$ Formula (3).

It should be understood that the codeword element in Formula (3) is determined according to a quadratic polynomial of *n*.

$$G_n = p_n \exp\left( j2\pi \left( a_0 + an + bn^2 + cn^3 \right) \right)$$  Formula (4).

It should be understood that the codeword element in Formula (4) is determined according to a cubic polynomial of *n*.

$$G_n = p_n \exp\left( j2\pi \left( a_0 + an + bn^2 + cn^3 + en^4 \right) \right)$$  Formula (5).

It should be understood that the codeword element in Formula (5) is determined according to a quartic polynomial of n. Also, in addition to the examples mentioned above, the high-order polynomial may also be in other possible forms, such as a higher-order polynomial, etc.

In the above Formula (3) to Formula (5), $G_n$ is a codeword element in the codeword block, $n$ is an antenna index, $a$ is a first precoding indication parameter, $b$ is a second precoding indication parameter, c is a third precoding indication parameter, e is a fourth precoding indication parameter, $a_0$ is a phase parameter of a signal transmitted under a channel, and $p_n$ is an amplitude of the element $G_n$ in the codeword block.

In some embodiments, the indication parameter of the target codeword mentioned above includes a first parameter and a second parameter, and the first parameter and the second parameter are used to indicate coefficients of respective monomials in the high-order polynomial.

Exemplarily, the first parameter and the second parameter may be used to indicate *a, b, c*, and e in Formula (3) to Formula (5) mentioned above.

In some embodiments, *a, b, c*, and e may also be implemented in forms of functions related to the first parameter and the second parameter.

Exemplarily, *a* may be implemented as a function $f_1(t_1,t_2)$, *b* may be implemented as a function $f_2(t_1,t_2)$, c may be implemented as a function $f_3(t_1,t_2)$, and e may be implemented as a function $f_4(t_1,t_2)$. That is, the above Formula (3) may be implemented as $G_{t_1,t_2,n} = p_n \exp(j2\pi(f_2(t_1,t_2(n^2 + f_1(t_1,t_2)n + a_0)))$, the above Formula (4) may be implemented as $G_{t_1,t_2,n} = p_n \exp(j2\pi(f_3(t_1,t_2(n^3 + f_2(t_1,t_2(n^2 + f_1(t_1,t_2)n + a_0)))$, and the above Formula (5) may be implemented as $G_{t_1,t_2,n} = p_n \exp(j2\pi(f_4(t_1,t_2(n^4 + f_3(t_1,t_2(n^3 + f_2(t_1,t_2(n^2 + f_1(t_1,t_2)n + a_0)))$.

In some embodiments, the indication parameter of the target codeword further includes a third parameter, and the third parameter is used to indicate a highest power of the high-order polynomial.

In a possible implementation, the first precoding indication parameter is determined based on the first parameter; if the third parameter is within a first preset range, the highest power of the high-order polynomial is 2, and the second precoding indication parameter is determined based on the first parameter and the second parameter, or the second precoding indication parameter is determined based on the second parameter; if the third parameter is within a second preset range, the highest power of the high-order polynomial is 3, and the third precoding indication parameter is determined based on the first parameter and the second parameter; and if the third parameter is within a third preset range, the highest power of the high-order polynomial is 4, and the fourth precoding indication parameter is determined based on the first parameter and the second parameter.

Herein, if *a, b,* c and e may be implemented as a function $f_{k'}(t_1,t_2)$. It is preset that $k' \le k$, $k' \ge 1$, $k' \le 4$, $f_{k'}(t_1,t_2)$ at least contains an expression with an order not less than 1 related to *t1* and *t2*.

In some embodiments, the first preset range mentioned above may be that a first indication parameter $k$ satisfies $1 \le k < 2$; and the second preset range may be that the third parameter $k$ satisfies $2 < k \le 3$; and the third preset range may be that the third parameter $k > 3$.

In an example, if the third parameter $k=2$, then $f_3(t_1,t_2) = 0$, $f_4(t_1,t_2) = 0$, so that the codeword element may be determined according to the quadratic polynomial of the antenna index *n* shown in the above Formula (3).

In another example, if the third parameter $k=3$, then $f_4(t_1,t_2) = 0$, so that the codeword element may be determined according to the cubic polynomial of the antenna index *n* shown in the above Formula (4).

In yet another example, if the third parameter $k=4$, then the codeword element may be determined according to the quartic polynomial of the antenna index *n* shown in the above Formula (5).

Possible implementations of the high-order polynomial of the antenna index are shown below.

**Implementation 1**

The first parameter $t_1 = -\dfrac{\sin\theta}{2P}$ and the second parameter $t_2 = \dfrac{\lambda\cos^2\theta}{8rQ}$ are set, and the codeword block is determined based on an element index parameter, the first parameter, the second parameter and the wavelength parameter.

Herein, $\lambda$ is the wavelength parameter, $r$ is a distance from the receiving end to the transmitting end, and $\theta$ is a transmission angle between the receiving end and the transmitting end. Also, $P$ is a first preset parameter related to values of the first parameter and the second parameter, and $Q$ is a second preset parameter related to values of the first parameter and the second parameter.

Furthermore, based on the above parameters, it may be concluded that there is a negative correlation between the value of the first parameter and the value of the second parameter, that is, when the first parameter increases, the parameter of the second parameter will decrease accordingly. Also, the relation between the first parameter and the second parameter may be represented as the following Formula (6):

$$t_2 = \frac{\lambda}{r} \frac{1 - 4P^2 t_1^2}{8Q} \qquad \text{Formula (6).}$$

In some embodiments, if the first precoding indication parameter is implemented as $f_1(t_1, t_2) = Pt_1$, the second precoding indication parameter is implemented as $f_2(t_1, t_2) = Qt_2$, the third precoding indication parameter is implemented

as $\quad f_3(t_1, t_2) = \dfrac{8PQ^2 t_1 t_2^2}{1 - 4P^2 t_1^2}$, and the fourth precoding indication parameter is implemented as

$$f_4(t_1, t_2) = \frac{4\left(20P^2 t_1^2 - 1\right) Q^3 t_2^3}{\left(1 - 4P^2 t_1^2\right)^2}.$$

That is, the above codeword element satisfies any one of the following Formula (7), Formula (8) or Formula (9):

$$G_{t_1, t_2, n} = p_n \exp\left( j2\pi \left( Qt_2 n^2 + Pt_1 n \right) \right) \qquad \text{Formula (7),}$$

$$G_{t_1, t_2, n} = p_n \exp\left( j2\pi \left( \frac{8PQ^2 t_1 t_2^2}{1 - 4P^2 t_1^2} n^3 + Qt_2 n^2 + Pt_1 n \right) \right) \qquad \text{Formula (8),}$$

$$G_{t_1, t_2, n} = p_n \exp\left( j2\pi \left( \frac{4\left(20P^2 t_1^2 - 1\right) Q^3 t_2^3}{\left(1 - 4P^2 t_1^2\right)^2} n^4 + \frac{8PQ^2 t_1 t_2^2}{1 - 4P^2 t_1^2} n^3 + Qt_2 n^2 + Pt_1 n \right) \right) \qquad \text{Formula (9).}$$

**Herein,** $G_{t_1, t_2, n}$ is a codeword element in the codeword block, $n$ is the antenna index, $t_1$ is the first parameter, $t_2$ is the second parameter, $P$ is the first preset parameter, $Q$ is the second preset parameter, and $p_n$ is an amplitude of the element $G_{t_1, t_2, n}$ in the codeword block.

In some embodiments, the indication parameter of the target codeword further includes a third parameter, and the third parameter is used to indicate a highest power of the high-order polynomial.

In an example, if the third parameter $k=2$, then $f_3(t_1, t_2) = 0$, $f_4(t_1, t_2) = 0$, so that the codeword element may be determined according to the quadratic polynomial of the antenna index $n$ shown in the above Formula (7).

In another example, if the third parameter $k=3$, then $f_4(t_1, t_2) = 0$, so that the codeword element may be determined according to the cubic polynomial of the antenna index $n$ shown in the above Formula (8).

In yet another example, if the third parameter $k=4$, the codeword element may be determined according to the quartic polynomial of the antenna index $n$ shown in the above Formula (9).

In some embodiments, if the first precoding indication parameter is implemented as $f_1(t_1, t_2) = Pt_1$, the second precoding indication parameter is implemented as $\quad f_2(t_1, t_2) = \dfrac{Qt_2}{1 - 4P^2 t_1^2}$, the third precoding indication parameter is implemented as $f_3(t_1, t_2) = 0$, and the fourth precoding indication parameter is implemented as $f_4(t_1, t_2) = 0$. At this time, the third parameter $k=2$. And the codeword element may also satisfy the following Formula (10)

$$G_{t_1,t_2,n} = p_n \exp\left( j2\pi\left( \frac{Qt_2}{1-4P^2t_1^2}n^2 + Pnt_1 \right) \right)$$
Formula (10).

Herein, $G_{t_1,t_2,n}$ is a codeword element in the codeword block, $n$ is the antenna index, $t_1$ is the first parameter, $t_2$ is the second parameter, $P$ is the first preset parameter, $Q$ is the second preset parameter, and $p_n$ is an amplitude of the element $G_{t_1,t_2,n}$ in the codeword block.

**Implementation 2**

The first parameter $t_1 = -\dfrac{\sin\theta}{2P}$ and the second parameter $t_2 = \dfrac{\lambda\cos^2\theta}{8rQ}$ are set in a same way. And the codeword block is determined based on an element index parameter, the first parameter, the second parameter, the wavelength parameter and an antenna spacing parameter. Herein, the antenna spacing parameter may be an array unit spacing.

Herein, for the first parameter and the second parameter, reference may be made to the specific description in the above Implementation 1, which will not be repeated herein.

In some embodiments, if the first precoding indication parameter is implemented as $f_1(t_1,t_2) = P\dfrac{t_1 d}{\lambda}$, the second precoding indication parameter is implemented as $f_2(t_1,t_2) = Q\dfrac{t_2 d^2}{\lambda}$, the third precoding indication parameter is implemented as $f_3(t_1,t_2) = \dfrac{2PQ^2 t_1 t_2^2}{(1-P^2 t_1^2)\lambda}d^3$, and the fourth precoding indication parameter is implemented as

$$f_4(t_1,t_2) = \frac{Q^3 t_2^3\left(5P^2 t_1^2 - 1\right)}{\left(1-P^2 t_1^2\right)^2 \lambda}d^4 .$$

That is, the above codeword element satisfies any one of the following Formula (11), Formula (12) or Formula (13):

$$G_{t_1,t_2,n} = p_n \exp\left( j\frac{2\pi}{\lambda}\left( Qt_2 n^2 d^2 + Pt_1 nd \right) \right)$$
Formula (11),

$$G_{t_1,t_2,n} = p_n \exp\left( j\frac{2\pi}{\lambda}\left( \frac{2PQ^2 t_1 t_2^2}{1-P^2 t_1^2}n^3 d^3 + Qt_2 n^2 d^2 + Pt_1 nd \right) \right)$$
Formula (12),

$$G_{t_1,t_2,n} = p_n \exp\left( j\frac{2\pi}{\lambda}\left( \frac{Q^3 t_2^3\left(5P^2 t_1^2 - 1\right)}{\left(1-P^2 t_1^2\right)^2}n^4 d^4 + \frac{2PQ^2 t_1 t_2^2}{1-P^2 t_1^2}n^3 d^3 + Qt_2 n^2 d^2 + Pt_1 nd \right) \right)$$
Formula (13).

Herein, $G_{t_1,t_2,n}$ is a codeword element in the codeword block, $n$ is the antenna index, $t_1$ is the first parameter, $t_2$ is the second parameter, $P$ is the first preset parameter, $Q$ is the second preset parameter, $p_n$ is an amplitude of the element $G_{t_1,t_2,n}$ in the codeword block, $d$ is the array unit spacing, and $\lambda$ is the wavelength parameter.

In some embodiments, the indication parameter of the target codeword further includes a third parameter, and the third parameter is used to indicate a highest power of the high-order polynomial.

In an example, if the third parameter $k=2$, then $f_3(t_1,t_2) = 0$, $f_4(t_1,t_2) = 0$, so that the codeword element may be determined according to the quadratic polynomial of the antenna index $n$ shown in the above Formula (11).

In another example, if the third parameter $k=3$, then $f_4(t_1,t_2) = 0$, so that the codeword element may be determined according to the cubic polynomial of the antenna index n shown in the above Formula (12).

In yet another example, if the third parameter $k=4$, the codeword element may be determined according to the quartic polynomial of the antenna index $n$ shown in the above Formula (13).

In some embodiments, if the first precoding indication parameter is implemented as $f_1(t_1,t_2) = P\dfrac{t_1 d}{\lambda}$, the

second precoding indication parameter is implemented as $f_2\left(t_1,t_2\right) = Q\dfrac{d^2 t_2}{\left(1-P^2 t_1^2\right)\lambda}$ , the third precoding indication parameter is implemented as $f_3(t_1,t_2) = 0$, and the fourth precoding indication parameter is implemented as $f_4(t_1,t_2) = 0$. At this time, the third parameter $k=2$. And the codeword element may also satisfy the following Formula (14).

$$G_{t_1,t_2,n} = p_n \exp\left( j\frac{2\pi}{\lambda}\left( \frac{Qt_2}{1-P^2 t_1^2}n^2 d^2 + Pt_1 nd \right) \right) \qquad \text{Formula (14).}$$

Herein, $G_{t_1,t_2,n}$ is a codeword element in the codeword block, $n$ is the antenna index, $t_1$ is the first parameter, $t_2$ is the second parameter, $P$ is the first preset parameter, $Q$ is the second preset parameter, $p_n$ is an amplitude of the element $G_{t_1,t_2,n}$ in the codeword block, $d$ is the array unit spacing, and $\lambda$ is the wavelength parameter.

## Implementation 3

The high-order polynomial of the antenna index is determined according to a fractional Fourier transform method or discrete fractional Fourier transform method.

If the first parameter $t_1 = \operatorname{atan}\left(\dfrac{\lambda r}{2P\pi\cos^2\theta}\right)$ and the second parameter $t_2 = \dfrac{2\pi}{\lambda Q}\sin t_1 \sin\theta$ are defined, where $\lambda$ is the wavelength parameter, $r$ is a distance from the receiving end to the transmitting end, and $\theta$ is a transmission angle between the receiving end and the transmitting end. Also, $P$ is the first preset parameter related to values of the first parameter and the second parameter, and $Q$ is the second preset parameter related to values of the first parameter and the second parameter.

Furthermore, based on the above parameters, it may be concluded that there is a positive correlation between the value of the first parameter and the value of the second parameter, that is, when the first parameter increases, the parameter of the second parameter will increase accordingly. Also, the relation between the first parameter and the second parameter may be represented as the following Formula (15):

$$t_2 = \frac{2\pi}{\lambda Q}\sin t_1 \sin\theta \qquad \text{Formula (15).}$$

In some embodiments, if the first precoding indication parameter is implemented as $f_1\left(t_1,t_2\right) = \dfrac{Qt_2}{2\pi\sin t_1}$ , the second precoding indication parameter is implemented as $f_2\left(t_1,t_2\right) = \dfrac{1}{4\pi P\tan t_1}$ , the third precoding indication parameter is implemented as $f_3(t_1,t_2) = 0$, and the fourth precoding indication parameter is implemented as $f_4(t_1,t_2) = 0$.

That is, the above codeword element satisfies the following Formula (16):

$$G_{t_1,t_2,n} = p_n \exp\left( j\left( \frac{n^2}{2P\tan t_1} - \frac{Qt_2 n}{\sin t_1} \right) \right) \qquad \text{Formula (16).}$$

Herein, $G_{t_1,t_2,n}$ is a codeword element in the codeword block, $n$ is the antenna index, $t_1$ is the first parameter, $t_2$ is the second parameter, $P$ is the first preset parameter, $Q$ is the second preset parameter, and $p_n$ is an amplitude of the element $G_{t_1,t_2,n}$ in the codeword block.

## Implementation 4

The first parameter $t_1 = -\dfrac{\sin\theta}{2P}$ and the second parameter $t_2 = \dfrac{\lambda}{8Qr}$ are set, and the codeword block is determined based on an element index parameter, the first parameter, the second parameter and the wavelength

parameter.

Herein, $\lambda$ is the wavelength parameter, $r$ is a distance from the receiving end to the transmitting end, and $\theta$ is a transmission angle between a receiving end and a transmitting end. Also, $P$ is the first preset parameter related to values of the first parameter and the second parameter, and $Q$ is the second preset parameter related to values of the first parameter and the second parameter.

Furthermore, based on the above parameters, it may be concluded that the value of the first parameter is not related to the value of the second parameter.

In some embodiments, if the first precoding indication parameter is implemented as $f_1(t_1,t_2) = Pt_1$, the second precoding indication parameter is implemented as $f_2(t_1,t_2) = Qt_2\left(1 - 4P^2t_1^2\right)$, the third precoding indication parameter is implemented as $f_3(t_1,t_2) = 8PQ^2\left(1 - 4P^2t_1^2\right)t_1t_2^2$, and the fourth precoding indication parameter is implemented as $f_4(t_1,t_2) = 4Q^3\left(20P^2t_1^2 - 1\right)\left(1 - 4P^2t_1^2\right)t_2^3$.

It may be seen that, the first precoding indication parameter, the second precoding indication parameter, the third precoding indication parameter and the fourth precoding indication parameter are positively proportional to 0 order, 1st order, 2nd order and 3rd order of $t_2$, respectively.

That is, the above codeword element satisfies any one of the following Formula (17), Formula (18) or Formula (19):

$$G_{t_1,t_2,n} = p_n \exp\left( j2\pi\left( Qt_2\left(1 - 4P^2t_1^2\right)n^2 + Pt_1n\right)\right) \qquad \text{Formula (17),}$$

$$G_{t_1,t_2,n} = p_n \exp\left( j2\pi\left( 8PQ^2\left(1 - 4P^2t_1^2\right)t_1t_2^2n^3 + Qt_2\left(1 - 4P^2t_1^2\right)n^2 + Pt_1n\right)\right) \qquad \text{Formula (18),}$$

$$G_{t_1,t_2,n} = p_n \exp\left( j2\pi\left( 4Q^3\left(20P^2t_1^2 - 1\right)\left(1 - 4P^2t_1^2\right)t_2^3n^4 + 8PQ^2\left(1 - 4P^2t_1^2\right)t_1t_2^2n^3 + Qt_2\left(1 - 4P^2t_1^2\right)n^2 + Pt_1n\right)\right)$$

$$\text{Formula (19).}$$

Herein, $G_{t_1,t_2,n}$ is a codeword element in the codeword block, $n$ is the antenna index, $t_1$ is the first parameter, $t_2$ is the second parameter, $P$ is the first preset parameter, $Q$ is the second preset parameter, and $p_n$ is an amplitude of the element $G_{t_1,t_2,n}$ in the codeword block.

In some embodiments, the indication parameter of the target codeword further includes a third parameter, and the third parameter is used to indicate a highest power of the high-order polynomial.

In an example, if the third parameter $k=2$, then $f_3(t_1,t_2) = 0$, $f_4(t_1,t_2) = 0$, so that the codeword element may be determined according to the quadratic polynomial of the antenna index n shown in the above Formula (17).

In another example, if the third parameter $k=3$, then $f_4(t_1,t_2) = 0$, so that the codeword element may be determined according to the cubic polynomial of the antenna index $n$ shown in the above Formula (18).

In yet another example, if the third parameter $k=4$, the codeword element may be determined according to the quartic polynomial of the antenna index $n$ shown in the above Formula (19).

In some embodiments, if the first precoding indication parameter is implemented as $f_1(t_1,t_2) = Pt_1$, the second precoding indication parameter is implemented as $f_2(t_1,t_2) = Qt_2$, the third precoding indication parameter is implemented as $f_3(t_1,t_2) = 0$, and the fourth precoding indication parameter is implemented as $f_4(t_1,t_2) = 0$. At this time, the third parameter $k=2$. And the codeword element may also satisfy the following Formula (20):

$$G_{t_1,t_2,n} = p_n \exp\left( j2\pi\left( Qt_2n^2 + Pt_1n\right)\right) \qquad \text{Formula (20).}$$

Herein, $G_{t_1,t_2,n}$ is a codeword element in the codeword block, $n$ is the antenna index, $t_1$ is the first parameter, $t_2$ is the second parameter, $P$ is the first preset parameter, $Q$ is the second preset parameter, and $p_n$ is an amplitude of the element $t_1,t_2,n$ in the codeword block.

**Implementation 5**

The first parameter $t_1 = -\dfrac{\sin\theta}{2P}$ and the second parameter $t_2 = \dfrac{1}{2Qr}$ are set, and the codeword block is determined based on an element index parameter, the first parameter, the second parameter, the wavelength parameter, and an antenna spacing parameter. Herein, the antenna spacing parameter may be the array unit spacing.

Herein, $\lambda$ is a wavelength parameter, $r$ is a distance from the receiving end to the transmitting end, and $\theta$ is a transmission angle between the receiving end and the transmitting end. Also, $P$ is the first preset parameter related to values of the first parameter and the second parameter, and $Q$ is the second preset parameter related to values of the first parameter and the second parameter.

Furthermore, based on the above parameters, it may be concluded that the value of the first parameter is not related to the value of the second parameter.

In some embodiments, if the first precoding indication parameter is implemented as $f_1(t_1, t_2) = \dfrac{Pt_1 d}{\lambda}$ , the

second precoding indication parameter is implemented as $f_2(t_1, t_2) = \dfrac{Qt_2\left(1 - P^2 t_1^2\right)d^2}{\lambda}$ , the third precoding indication parameter is implemented as $f_3(t_1, t_2) = \dfrac{2PQ^2 t_1\left(1 - P^2 t_1^2\right)t_2^2 d^3}{\lambda}$ , and the fourth precoding indication parameter is implemented as $f_4(t_1, t_2) = \dfrac{Q^3\left(5P^2 t_1^2 - 1\right)\left(1 - P^2 t_1^2\right)t_2^3 d^4}{\lambda}$ . It may be seen that, the first precoding indication parameter, the second precoding indication parameter, the third precoding indication parameter and the fourth precoding indication parameter are positively proportional to 0 order, 1st order, 2nd order and 3rd order of $t_2$, respectively.

That is, the above codeword element satisfies any one of the following Formula (21), Formula (22) or Formula (23):

$$G_{t_1,t_2,n} = p_n \exp\!\left( j\frac{2\pi}{\lambda}\left( Qt_2\left(1 - P^2 t_1^2\right)n^2 d^2 + Pt_1 nd \right) \right) \qquad \text{Formula (21),}$$

$$G_{t_1,t_2,n} = p_n \exp\!\left( j\frac{2\pi}{\lambda}\left( 2PQ^2 t_1\left(1 - P^2 t_1^2\right)t_2^2 n^3 d^3 + Qt_2\left(1 - P^2 t_1^2\right)n^2 d^2 + Pt_1 nd \right) \right) \qquad \text{Formula (22),}$$

$$G_{t_1,t_2,n} = p_n \exp\!\left( j\frac{2\pi}{\lambda}\left( 2PQ^2 t_1\left(1 - P^2 t_1^2\right)t_2^2 n^3 d^3 + Qt_2\left(1 - P^2 t_1^2\right)n^2 d^2 + Pt_1 nd \right) \right)$$
$$\times \exp\!\left( j\frac{2\pi}{\lambda}\left( Q^3\left(5P^2 t_1^2 - 1\right)\left(1 - P^2 t_1^2\right)t_2^3 n^4 d^4 \right) \right) \qquad \text{Formula (23).}$$

Herein, $G_{t_1,t_2,n}$ is a codeword element in the codeword block, $n$ is the antenna index, $t_1$ is the first parameter, $t_2$ is the second parameter, $P$ is the first preset parameter, $Q$ is the second preset parameter, and $p_n$ is an amplitude of the element $G_{t_1,t_2,n}$ in the codeword block.

In some embodiments, the indication parameter of the target codeword further includes a third parameter, and the third parameter is used to indicate a highest power of the high-order polynomial.

In an example, if the third parameter $k=2$, then $f_3(t_1, t_2) = 0$, $f_4(t_1, t_2) = 0$, so that the codeword element may be determined according to the quadratic polynomial of the antenna index $n$ shown in the above Formula (21).

In another example, if the third parameter $k=3$, then $f_4(t_1, t_2) = 0$, so that the codeword element may be determined according to the cubic polynomial of the antenna index $n$ shown in the above Formula (22).

In yet another example, if the third parameter $k=4$, the codeword element may be determined according to the quartic polynomial of the antenna index $n$ shown in the above Formula (23).

In some embodiments, if the first precoding indication parameter is implemented as $f_1(t_1,t_2) = \dfrac{Pt_1 d}{\lambda}$, the second precoding indication parameter is implemented as $f_2(t_1,t_2) = \dfrac{Qt_2 d^2}{\lambda}$, the third precoding indication parameter is implemented as $f_3(t_1,t_2) = 0$, and the fourth precoding indication parameter is implemented as $f_4(t_1,t_2) = 0$. At this time, the third parameter $k=2$. And the codeword element may also satisfy the following Formula (24):

$$G_{t_1,t_2,n} = p_n \exp\left( j\frac{2\pi}{\lambda}\left( Qt_2 n^2 d^2 + Pt_1 nd \right) \right) \qquad \text{Formula (24).}$$

Herein, $G_{t_1,t_2,n}$ is a codeword element in the codeword block, $n$ is the antenna index, $t_1$ is the first parameter, $t_2$ is the second parameter, $P$ is the first preset parameter, $Q$ is the second preset parameter, and $p_n$ is an amplitude of the element $G_{t_1,t_2,n}$ in the codeword block.

**Implementation 6**

The first parameter $t_1 = -\dfrac{\sin\theta}{2P}$ and the second parameter $t_2 = \dfrac{1}{Qr}$ are set. And the codeword block is determined based on an element index parameter, the first parameter, the second parameter and the wavelength parameter.

Herein, $\lambda$ is the wavelength parameter, $r$ is a distance from the receiving end to the transmitting end, and $\theta$ is a transmission angle between the receiving end and the transmitting end. Also, $P$ is the first preset parameter related to values of the first parameter and the second parameter, and $Q$ is the second preset parameter related to values of the first parameter and the second parameter.

Furthermore, based on the above parameters, it may be concluded that the value of the first parameter is not related to the value of the second parameter.

In some embodiments, if the first precoding indication parameter is implemented as $f_1(t_1,t_2) = Pt_1$, the second precoding indication parameter is implemented as $f_2(t_1,t_2) = \dfrac{\left(1-4P^2 t_1^2\right)}{8Qt_2}$, the third precoding indication parameter is implemented as $f_3(t_1,t_2) = \dfrac{Pt_1\left(1-4P^2 t_1^2\right)}{8Q^2 t_2^2}$, and the fourth precoding indication parameter is implemented as $f_4(t_1,t_2) = \dfrac{\left(20P^2 t_1^2 - 1\right)\left(1-4P^2 t_1^2\right)}{128Q^3 t_2^3}$. It may be seen that, the first precoding indication parameter, the second precoding indication parameter, the third precoding indication parameter and the fourth precoding indication parameter are positively proportional to 0 order, 1st order, 2nd order and 3rd order of $t_2$, respectively.

That is, the above codeword element satisfies any one of the following Formula (25), Formula (26) or Formula (27):

$$G_{t_1,t_2,n} = p_n \exp\left( j2\pi\left( \frac{\left(1-4P^2 t_1^2\right)}{8Qt_2} n^2 + Pt_1 n \right) \right) \qquad \text{Formula (25),}$$

$$G_{t_1,t_2,n} = p_n \exp\left( j2\pi\left( \frac{Pt_1\left(1-4P^2 t_1^2\right)}{16Q^2 t_2^2} n^3 + \frac{\left(1-4P^2 t_1^2\right)}{8Qt_2} n^2 + Pt_1 n \right) \right) \qquad \text{Formula (26),}$$

$$G_{t_1,t_2,n} = p_n \exp\left( j2\pi\left( \frac{\left(20P^2 t_1^2 - 1\right)\left(1-4P^2 t_1^2\right)}{128Q^3 t_2^3} n^4 + \frac{Pt_1\left(1-4P^2 t_1^2\right)}{16Q^2 t_2^2} n^3 + \frac{\left(1-4P^2 t_1^2\right)}{8Qt_2} n^2 + Pt_1 n \right) \right) \qquad \text{Formula (27).}$$

Herein, $G_{t_1,t_2,n}$ is a codeword element in the codeword block, $n$ is the antenna index, $t_1$ is the first parameter, $t_2$ is the second parameter, $P$ is the first preset parameter, Q is the second preset parameter, and $p_n$ is an amplitude of the element $G_{t_1,t_2,n}$ in the codeword block.

In some embodiments, the indication parameter of the target codeword further includes a third parameter, and the third parameter is used to indicate a highest power of the high-order polynomial.

In an example, if the third parameter $k=2$, then $f_3(t_1,t_2) = 0$, $f_4(t_1,t_2) = 0$, so that the codeword element may be determined according to the quadratic polynomial of the antenna index $n$ shown in the above Formula (25).

In another example, if the third parameter $k=3$, then $f_4(t_1,t_2) = 0$, so that the codeword element may be determined according to the cubic polynomial of the antenna index $n$ shown in the above Formula (26).

In yet another example, if the third parameter $k=4$, the codeword element may be determined according to the quartic polynomial of the antenna index $n$ shown in the above Formula (27).

In some embodiments, if the first precoding indication parameter is implemented as $f_1(t_1,t_2) = Pt_1$, the second precoding indication parameter is implemented as $f_2(t_1,t_2) = \dfrac{1}{8Qt_2}$, the third precoding indication parameter is implemented as $f_3(t_1,t_2) = 0$, and the fourth precoding indication parameter is implemented as $f_4(t_1,t_2) = 0$. At this time, the third parameter $k=2$. And the codeword element may also satisfy the following Formula (28):

$$G_{t_1,t_2,n} = p_n \exp\left( j2\pi\left( \frac{1}{8Qt_2}n^2 + Pt_1 n \right) \right) \qquad \text{Formula (28).}$$

Herein, $G_{t_1,t_2,n}$ is a codeword element in the codeword block, $n$ is the antenna index, $t_1$ is the first parameter, $t_2$ is the second parameter, $P$ is the first preset parameter, Q is the second preset parameter, and $p_n$ is an amplitude of the element $G_{t_1,t_2,n}$ in the codeword block.

**Implementation 7**

The first parameter $t_1 = -\dfrac{\sin\theta}{2P}$ and second parameter $t_2 = \dfrac{r}{C}$ are set. And the codeword block is determined based on an element index parameter, the first parameter, the second parameter, the wavelength parameter and an antenna spacing parameter. Herein, the antenna spacing parameter may be the array unit spacing.

Herein, $\lambda$ is the wavelength parameter, $r$ is a distance from the receiving end to the transmitting end, and $\theta$ is a transmission angle between the receiving end and the transmitting end. Also, $P$ is the first preset parameter related to values of the first parameter and the second parameter, and Q is the second preset parameter related to values of the first parameter and the second parameter.

Furthermore, based on the above parameters, it may be concluded that the value of the first parameter is not related to the value of the second parameter.

In some embodiments, if the first precoding indication parameter is implemented as $f_1(t_1,t_2) = \dfrac{Pt_1 d}{\lambda}$, the second precoding indication parameter is implemented as $f_2(t_1,t_2) = \dfrac{(1-P^2 t_1^2)d^2}{2Q\lambda t_2}$, the third precoding indication parameter is implemented as $f_3(t_1,t_2) = \dfrac{t_1(1-P^2 t_1^2)d^3}{2Q^2 \lambda t_2^2}$, and the fourth precoding indication parameter is implemented as $f_4(t_1,t_2) = \dfrac{(5P^2 t_1^2 -1)(1-P^2 t_1^2)d^4}{8Q^3 \lambda t_2^3}$. It may be seen that, the first precoding indication parameter, the second precoding indication parameter, the third precoding indication parameter and the fourth precoding indication parameter are negatively proportional to 0 order, 1st order, 2nd order and 3rd order of $t_2$, respectively.

That is, the above codeword element satisfies any one of the following Formula (29), Formula (30) or Formula (31):

$$G_{t_1,t_2,n} = p_n \exp\left( j\frac{2\pi}{\lambda}\left( \frac{\left(1-P^2 t_1^2\right)}{2Q t_2} n^2 d^2 + P t_1 nd \right) \right)$$
Formula (29),

$$G_{t_1,t_2,n} = p_n \exp\left( j\frac{2\pi}{\lambda}\left( \frac{P t_1\left(1-P^2 t_1^2\right)}{2Q^2 t_2^2} n^3 d^3 + \frac{\left(1-P^2 t_1^2\right)}{2Q t_2} n^2 d^2 + P t_1 nd \right) \right)$$
Formula (30),

$$G_{t_1,t_2,n} = p_n \exp\left( j\frac{2\pi}{\lambda}\left( \frac{P t_1\left(1-P^2 t_1^2\right)}{2Q^2 t_2^2} n^3 d^3 + \frac{\left(1-P^2 t_1^2\right)}{2Q t_2} n^2 d^2 + P t_1 nd \right) \right) \times \exp\left( j\frac{2\pi}{\lambda}\left( \frac{\left(5P^2 t_1^2 -1\right)\left(1-P^2 t_1^2\right)}{8Q^3 t_2^3} n^4 d^4 \right) \right)$$
Formula (31).

Herein, $G_{t1,t2,n}$ is a codeword element in the codeword block, $n$ is the antenna index, $t_1$ is the first parameter, $t_2$ is the second parameter, $P$ is the first preset parameter, Q is the second preset parameter, and $p_n$ is an amplitude of the element $G_{t1,t2,n}$ in the codeword block.

In some embodiments, the indication parameter of the target codeword further includes a third parameter, and the third parameter is used to indicate a highest power of the high-order polynomial.

In an example, if the third parameter $k$=2, then $f_3(t_1,t_2)$ = 0, $f_4(t_1,t_2)$ = 0, so that the codeword element may be determined according to the quadratic polynomial of the antenna index n shown in the above Formula (29).

In another example, if the third parameter $k$=3, then $f_4(t_1,t_2)$ = 0, so that the codeword element may be determined according to the cubic polynomial of the antenna index $n$ shown in the above Formula (30).

In yet another example, if the third parameter $k$=4, the codeword element may be determined according to the quartic polynomial of the antenna index $n$ shown in the above Formula (31).

In some embodiments, if the first precoding indication parameter is implemented as $f_1\left(t_1,t_2\right) = \frac{P t_1 d}{\lambda}$ , the second precoding indication parameter is implemented as $f_2\left(t_1,t_2\right) = \frac{1}{2Q\lambda t_2}$ , the third precoding indication parameter is implemented as $f_3(t_1,t_2)$ = 0, and the fourth precoding indication parameter is implemented as $f_4(t_1,t_2)$ = 0. At this time, the third parameter $k$=2. And the codeword element may also satisfy the following Formula (32):

$$G_{t_1,t_2,n} = p_n \exp\left( j\frac{2\pi}{\lambda}\left( \frac{1}{2Q t_2} n^2 d^2 + P t_1 nd \right) \right)$$
Formula (32).

Herein, $G_{t1,t2,n}$ is a codeword element in the codeword block, $n$ is the antenna index, $t_1$ is the first parameter, $t_2$ is the second parameter, $P$ is the first preset parameter, Q is the second preset parameter, and $p_n$ is an amplitude of the element $G_{t1,t2,n}$ in the codeword block.

In some embodiments, after elements in the codeword block are determined based on the various possible implementations described above, at least one codeword block required may be generated based on a preset codeword block generation model.

In some embodiments, the at least one codeword block obtained based on the codeword block generation model satisfies the relationship shown in the following Formula (33):

$$G = \left( G_{t_1,t_2} \right) \otimes \left( G'_{t'_1,t'_2} \right)$$
Formula (33).

Exemplarily, G is the codeword block in the codeword, $G_{t1,t2}$ is a first codeword block, and $G'_{t'_1,t'_2}$ is a second codeword block.

The first codeword block $G_{t1,t2}$ may be represented as $G_{t1,t2}$, which is

$$G_{t_1,t_2} = \left[ G_{t_1,t_2,n_1} \quad G_{t_1,t_2,n_2} \quad \cdots \quad G_{t_1,t_2,n_{N_1}} \right], \ G'_{t'_1,t'_2} \text{ is } G'_{t'_1,t'_2} = \left[ G_{t'_1,t'_2,n'_1} \quad G_{t'_1,t'_2,n'_2} \quad \cdots \quad G_{t'_1,t'_2,n'_{N_1}} \right].$$

Herein, $N_1$ and $N_1'$ are a number of elements, $\otimes$ represents a Kronecker product operation, $G_{t_1,t_2} \in C^{N_1 \times 1}, G_{t_1',t_2'} \in C^{N_1' \times 1}$, $t_1$ is the first parameter of the first codeword block $G_{t_1,t_2}$, $t_2$ is the second parameter of the first codeword block $G_{t_1,t_2}$; $t_1'$ is the first parameter of the second codeword block $G_{t_1',t_2'}$, and $t_2'$ is the second parameter of the second codeword block $G_{t_1',t_2'}$.

In some embodiments, the above $t_1$, $t_2$, $t_1'$ and $t_2'$ may be determined based on a horizontal angle $\theta$, a pitch angle $\varphi$ and a distance r between the receiving end and the transmitting end.

Exemplarily, $t_1$, $t_2$, $t_1'$ and $t_2'$ satisfy any of the following relations:

$$t_1 = P\sin\theta\cos\varphi, t_2 = \frac{1-\sin^2\theta\cos^2\varphi}{2Qr}, t_1' = P\sin\theta\sin\varphi, t_2' = \frac{1-\sin^2\theta\sin^2\varphi}{2Qr},$$

or,

$$t_1 = \frac{\sin\theta\cos\varphi}{2P}, t_2 = \frac{\lambda(1-\sin^2\theta\cos^2\varphi)}{8Qr}, t_1' = \frac{\sin\theta\sin\varphi}{2P}, t_2' = \frac{\lambda(1-\sin^2\theta\sin^2\varphi)}{8Qr},$$

or,

$$t_1 = P\sin\theta\cos\varphi, t_2 = \frac{1}{2Qr}, t_1' = P\sin\theta\sin\varphi, t_2' = \frac{1}{2Qr},$$

or,

$$t_1 = \frac{\sin\theta\cos\varphi}{2P}, t_2 = \frac{\lambda}{Qr}, t_1' = \frac{\sin\theta\sin\varphi}{2P}, t_2' = \frac{\lambda}{Qr},$$

or,

$$t_1 = P\sin\theta\cos\varphi, t_2 = \frac{r}{2O}, t_1' = P\sin\theta\sin\varphi, t_2' = \frac{r}{2O},$$

or,

$$t_1 = \frac{\sin\theta\cos\varphi}{2P}, t_2 = \frac{\tilde{r}}{\lambda Q}, t_1' = \frac{\sin\theta\sin\varphi}{2P}, t_2' = \frac{\tilde{r}}{\lambda Q}.$$

Furthermore, in addition to the relations listed above, $t_1$, $t_2$, $t_1'$ and $t_2'$ may also satisfy a linear transformation, a multiplication and division change or a trigonometric function, a logarithmic function, an exponential function, a power function, an inverse transformation, etc., of the above functions, which will not be exhaustively listed herein.

In some embodiments, a value of $t_1$ is determined based on a value of $t_2$, a value of $t_1'$, and a value of $t_2'$; and/or, a value of $t_2$ is determined based on a value of $t_1$, a value of $t_1'$, and a value of $t_2'$; and/or, a value of $t_1'$ is determined based on a value of $t_1$, a value of $t_2$, and a value of $t_2'$; and/or, a value of $t_2'$ is determined based on a value of $t_1$, a value of $t_2$, and a value of $t_1'$.

Exemplarily, if $t_1$, $t_2$, $t_1'$ and $t_2'$ satisfy the following relations: $t_1 = \sin\theta\cos\varphi, t_2 = \frac{1-\sin^2\theta\cos^2\varphi}{2r}, t_1' = \sin\theta\sin\varphi, t_2' = \frac{1-\sin^2\theta\sin^2\varphi}{2r}$, then the value of $t_2'$ may be represented as

$$t_2' = \frac{(1-t_1'^2)t_2}{1-t_1^2}.$$

Of course, the value of $t_1$ may also be represented by $t_2$, $t_1'$ and $t_2'$, the value of $t_2$ may also be represented by $t_1$, $t_1'$ and $t_2'$, and the value of $t_1'$ may also be represented by $t_2$, $t_1$ and $t_2'$, which will not be exhaustively listed herein.

In some embodiments, the values of $t_1$, $t_2$, $t_1'$ and $t_2'$ are determined based on three preset feedback parameters $s_1$, $s_2$ and $s_3$ which are independent from each other.

Exemplarily, the preset feedback parameters $s_1$, $s_2$ and $s_3$ may be the horizontal angle $\theta$, the pitch angle $\varphi$, and the distance r between the receiving end and the transmitting end, or may be determined by other possible parameters.

In some embodiments, another codeword block generation model is further provided.

Herein, a modulus of an element in the above-mentioned at least one codeword block is determined based on at least one of a power control parameter, a position parameter, a channel measurement parameter, and a configuration parameter from the receiving end to the transmitting end.

Exemplarily, a modulus $p_n$ of an element in the codeword block satisfies the relation shown in the following Formula (34):

$$p_n = wf\left(d_n, S_n\right) \qquad \text{Formula (34).}$$

Herein, $w$ is the power control parameter, $d_n$ is the position parameter, and $S_n$ is a relevant parameter of the channel measurement parameter with the configuration parameter of a receiving side and a transmitting side.

Exemplarily, $S_n$ may be used to indicate possible parameters such as unit effective area, polarization mismatch degree, etc.

Alternatively, a modulus of an element in the codeword block satisfies the relation shown in the following Formula (35) or Formula (36):

$$p_n = wd_n \qquad \text{Formula (35),}$$

$$p_n = w\frac{1}{d_n} \qquad \text{Formula (36).}$$

In some embodiments, the above position parameter $d_n$ may be determined based on one or more of the horizontal angle $\theta$, the distance $r$ between the receiving end and the transmitting end, and the antenna index $n$.

Exemplarily, the position parameter $d_n$ satisfies any one of the following relations:

$$d_n = r - nd\sin\theta,$$

or,

$$d_n = r - nd\sin\theta + n^2\frac{d^2\cos^2\theta}{2r},$$

or,

$$d_n = r - nd\sin\theta + n^2\frac{d^2}{2r},$$

or,

$$d_n = r - nd\sin\theta + n^2\frac{d^2\cos^2\theta}{2r} + n^3\frac{d^3\sin\theta\cos^2\theta}{2r^2},$$

or,

$$d_n = r - nd\sin\theta + n^2\frac{d^2\cos^2\theta}{2r} + n^3\frac{d^3\sin\theta\cos^2\theta}{2r^2} + n^4\frac{d^4}{8r^3}\left(5\sin^2\theta - 1\right)\cos^2\theta.$$

S103, the receiving end transmits an indication parameter of the target codeword to the transmitting end.

Correspondingly, the transmitting end may determine the target codeword according to the indication information of the receiving end.

Herein, the indication information may be an index of the target codeword. Alternatively, the indication information may also be a generation parameter for the codeword, such as the first parameter, the second parameter, and the third parameter in the aforementioned S102. The embodiments of the present disclosure do not impose any limitation on the specific implementation, as long as the indication information can indicate the target codeword characterizing the channel information in the codeword set, so that the transmitting end may accurately acquire the channel information of the receiving end according to the target codeword, for precoding.

Based on the channel information feedback method provided by the embodiments of the present disclosure, the codebook in the codebook set may be determined by considering the codebook forms corresponding to different near-field parameters, and the idea of a multi-domain codebook design is adopted, and includes a plurality of codebook forms defined based on parameters in different domains, so in the scenario of near-field communication, the relation between changes of the phase of the codeword element and the antenna index may also be reflected accurately, and the channel information is fed back accurately, so that the codebook set may satisfy the requirements for precoding performance and communication quality in different scenarios.

It can be understood that in order to achieve the functions mentioned above, a communication apparatus contains corresponding hardware structures and/or software modules for performing respective functions. Those skilled in the art should easily realize that, in combination with the exemplary algorithm steps described in the embodiments of the present disclosure, the present disclosure can be implemented in the form of hardware or a combination of hardware and computer software. Whether a certain function is performed via the hardware or the computer software-driven hardware depends on the specific application and restrictive conditions on the design of the technical solutions. Professional technicians may use different methods to implement the described functions for each specific application, but such implementation should not be considered beyond the scope of the present disclosure.

In the embodiments of the present disclosure, the communication apparatus may be divided into functional modules according to the foregoing method embodiments, for example, may be divided in a way that each functional module corresponds to each function, or two or more functions are integrated into one functional module. The integrated module may be implemented in the form of hardware, or may be implemented in the form of software. It should be noted that the division of the modules in embodiments of the present disclosure is schematic, which is only a logical functional division, and there may be other divisions for in actual implementations. The following is an example of dividing each functional module corresponding to each function.

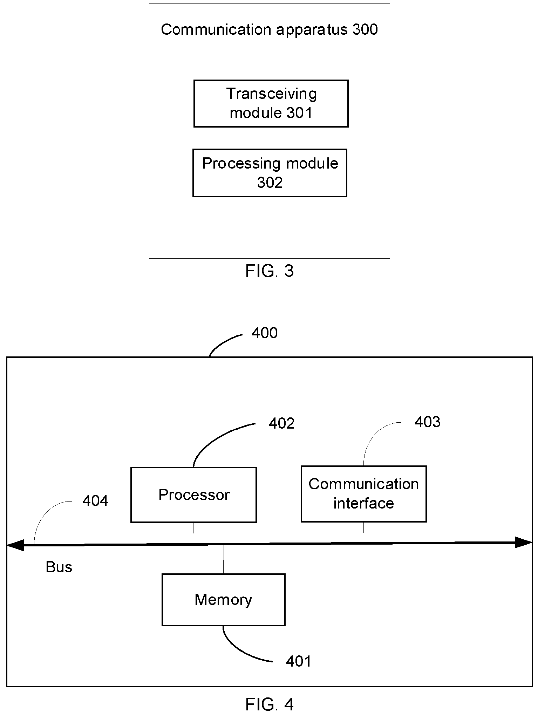

FIG. 3 is a structural schematic diagram of communication, provided by the embodiments of the present disclosure. The access node may perform the precoding method provided by the above method embodiments. As shown in FIG. 3, the communication apparatus 300 includes a transceiving module 301 and a processing module 302.

In some embodiments, the transceiving module 301 is configured to acquire channel information.

The processing module 302 is configured to determine a target codeword from a codebook set according to the channel information. The codebook set includes a plurality of codewords, and each codeword consists of one or more codeword blocks.

The transceiving module 301 is further configured to transmit an indication parameter of the target codeword.

In a case of implementing the functions of the integrated module mentioned above in the form of hardware, the embodiments of the present disclosure provide a structural schematic diagram of a communication apparatus. As shown in FIG. 4, the communication apparatus 400 includes a processor 402 and a bus 404. Optionally, the communication apparatus 400 may further include a memory 401; optionally, the communication apparatus 400 may further include a communication interface 403.

The processor 402 may implement or execute various illustrative logical blocks, modules and circuits described in conjunction with the embodiments of the present disclosure. The processor 402 may be a central processing unit, a general-purpose processor, a digital signal processor, an application specific integrated circuit, a field programmable gate array or any other programmable logic device, a transistor logic device, a hardware component, or any combination thereof. It may implement or execute various illustrative logical blocks, modules and circuits described in conjunction with the embodiments of the present disclosure. The processor 402 may also be a combination capable of implementing computing functions, for example, including a combination of one or more microprocessors, or a combination of a digital signal processor (DSP) and a microprocessor.

The communication interface 403 is configured to connect with other devices through a communication network. The communication network may be an Ethernet, a radio access network, a wireless local area network (WLAN), or the like.

The memory 401 may be, but is not limited to, a read-only memory (ROM) or any other type of static storage device capable of storing static information and instructions, a random access memory (RAM) or any other type of dynamic storage device capable of storing information and instructions, or an electrically erasable programmable read-only memory (EEPROM), a magnetic disk storage medium or any other magnetic storage device, or any other medium capable of being used to carry or store desired program codes and capable of being accessed by a computer, where the desired program codes have instructions or are in the form of data structure.

As a possible implementation, the memory 401 may exist independently of the processor 402, and the memory 401 may be connected to the processor 402 through the bus 404, for storing instructions or program codes. When calling and executing the instructions or the program codes stored in the memory 401, the processor 402 is capable of realizing the method provided by the embodiments of the present disclosure.

As another possible implementation, the memory 401 may also be integrated with the processor 402.

The bus 404 may be an extended industry standard architecture (EISA) bus or the like. The bus 404 may be classified into an address bus, a data bus, and a control bus, or the like. For the convenience of representation, only one thick line is used in FIG. 4 for representation, but it does not mean that there is only one bus or one type of bus.

Some embodiments of the present disclosure provide a computer-readable storage medium (e.g., a non-transitory computer-readable storage medium) having stored computer program instructions therein, where the computer program instructions, when executed on a computer, cause the computer to perform the method as described in any one of the above embodiments.

Exemplarily, the computer-readable storage medium may include, but is not limited to a magnetic storage device (e.g., a hard disk, a floppy disk or a magnetic tape, etc.), an optical disk (e.g., a compact disk (CD) or a digital versatile disk (DVD), etc.), a smart card and a flash memory device (e.g., an erasable programmable read-only memory (EPROM), a card, a stick or a key driver, etc.). The various computer-readable storage media described in the present disclosure may represent one or more devices for storing information and/or other machine-readable storage media for storing information. The term "machine-readable storage medium" may include, but is not limited to, a radio channel and various other media capable of storing, containing, and/or carrying instructions and/or data.

The embodiments of the present disclosure provide a computer program product including instructions, and the computer program product, when executed on a computer, causes the computer to perform the method as described in any one of the above embodiments.

The foregoing descriptions are merely specific implementations of the present disclosure, but the protection scope of the present disclosure is not limited thereto. Any change or replacement within the technical scope disclosed in the present disclosure shall be included in the protection scope of the present disclosure. Therefore, the protection scope of the present disclosure shall be determined based on the protection scope of the claims.

**Claims**

1. A channel information feedback method, **characterized by** comprising:

   acquiring channel information;
   determining a target codeword from a codebook set indicated by the channel information, according to the channel information, wherein the codebook set comprises a plurality of codewords, each of the codewords consists of one or more codeword blocks; and
   transmitting an indication parameter of the target codeword.

2. The method according to claim 1, wherein for at least one codeword in the codebook set, there is at least one codeword element in the codeword being determined according to a high-order polynomial of an antenna index.

3. The method according to claim 2, wherein the codeword element satisfies relations as follows:

$$G_n = p_n \exp\left( j2\pi \left( a_0 + an + bn^2 \right) \right),$$

$$G_n = p_n \exp\left( j2\pi \left( a_0 + an + bn^2 + cn^3 \right) \right)$$

$$G_n = p_n \exp\left( j2\pi \left( a_0 + an + bn^2 + cn^3 + en^4 \right) \right),$$

wherein $G_n$ is the codeword element, n is the antenna index, $n$ is a first precoding indication parameter, $b$ is a second precoding indication parameter, $c$ is a third precoding indication parameter, $e$ is a fourth precoding indication

parameter, $a_0$, is a phase parameter of a signal transmitted under the channel, and $p_n$ is an amplitude of the codeword element $G_n$.

4. The method according to claim 3, wherein the indication parameter of the target codeword comprises a first parameter and a second parameter, and the first parameter and the second parameter are used to determine a coefficient of each monomial in the high-order polynomial.

5. The method according to claim 4, wherein the first parameter is determined according to one or more of a wavelength parameter, a distance from a receiving end to a transmitting end, a transmission angle between the receiving end and the transmitting end, a first preset parameter or a second preset parameter.

6. The method according to claim 4, wherein the second parameter is determined according to one or more of a wavelength parameter, a distance from a receiving end to a transmitting end, a transmission angle between the receiving end and the transmitting end, a first preset parameter or a second preset parameter.

7. The method according to claim 4, wherein the indication parameter of the target codeword further comprises a third parameter, and the third parameter is used to indicate a highest power of the high-order polynomial.

8. The method according to claim 4, wherein the first precoding indication parameter is determined based on the first parameter;

if the third parameter is within a first preset range, an order of the highest power of the high-order polynomial is 2, and the second precoding indication parameter is determined based on the first parameter and the second parameter, or the second precoding indication parameter is determined based on the second parameter;
if the third parameter is within a second preset range, an order of the highest power of the high-order polynomial is 3, and the third precoding indication parameter is determined based on the first parameter and the second parameter;
if the third parameter is within a third preset range, an order of the highest power of the high-order polynomial is 4, and the fourth precoding indication parameter is determined based on the first parameter and the second parameter.

9. The method according to claim 4, wherein the codeword element satisfies any one of:

$$G_{t_1,t_2,n} = p_n \exp\left( j2\pi \left( Qt_2 n^2 + Pt_1 n \right) \right).$$

$$G_{t_1,t_2,n} = p_n \exp\left( j2\pi \left( \frac{Qt_2}{1-4P^2 t_1^2} n^2 + Pnt_1 \right) \right),$$

$$G_{t_1,t_2,n} = p_n \exp\left( j2\pi \left( \frac{8PQ^2 t_1 t_2^2}{1-4P^2 t_1^2} n^3 + Qt_2 n^2 + Pt_1 n \right) \right),$$

$$G_{t_1,t_2,n} = p_n \exp\left( j2\pi \left( \frac{4\left(20P^2 t_1^2 - 1\right)Q^3 t_2^3}{\left(1-4P^2 t_1^2\right)^2} n^4 + \frac{8PQ^2 t_1 t_2^2}{1-4P^2 t_1^2} n^3 + Qt_2 n^2 + Pt_1 n \right) \right);$$

wherein $G_{t_1,t_2,n}$ is the codeword element, $n$ is the antenna index, $t_1$ is the first parameter, $t_2$ is the second parameter, $P$ is a first preset parameter, $Q$ is a second preset parameter, and $p_n$ is an amplitude of the codeword element $G_{t_1,t_2,n}$.

10. The method according to claim 4, wherein the codeword element satisfies any one of:

$$G_{t_1,t_2,n} = p_n \exp\left( j\frac{2\pi}{\lambda}\left( Qt_2 n^2 d^2 + Pt_1 nd \right) \right).$$

$$G_{t_1,t_2,n} = p_n \exp\left( j\frac{2\pi}{\lambda}\left( \frac{Qt_2}{1-P^2 t_1^2} n^2 d^2 + Pt_1 nd \right) \right),$$

$$G_{t_1,t_2,n} = p_n \exp\left( j\frac{2\pi}{\lambda}\left( \frac{2PQ^2 t_1 t_2^2}{1-P^2 t_1^2} n^3 d^3 + Qt_2 n^2 d^2 + Pt_1 nd \right) \right).$$

$$G_{t_1,t_2,n} = p_n \exp\left( j\frac{2\pi}{\lambda}\left( \frac{Q^3 t_2^3 \left(5P^2 t_1^2 - 1\right)}{\left(1-P^2 t_1^2\right)^2} n^4 d^4 + \frac{2PQ^2 t_1 t_2^2}{1-P^2 t_1^2} n^3 d^3 + Qt_2 n^2 d^2 + Pt_1 nd \right) \right);$$

wherein $G_{t_1,t_2,n}$ is the codeword element, n is the antenna index, $t_1$ is the first parameter, $t_2$ is the second parameter, $P$ is a first preset parameter, $Q$ is a second preset parameter, $p_n$ is an amplitude of the codeword element $G_{t_1,t_2,n}$, $d$ is an array unit spacing, and $\lambda$ is a wavelength parameter.

**11.** The method according to claim 4, wherein the codeword element satisfies any one of:

$$G_{t_1,t_2,n} = p_n \exp\left( j\left( \frac{n^2}{2P\tan t_1} - \frac{Qt_2 n}{\sin t_1} \right) \right);$$

wherein $G_{t_1,t_2,n}$ is the codeword element, $n$ is the antenna index, $t_1$ is the first parameter, $t_2$ is the second parameter, $P$ is a first preset parameter, $Q$ is a second preset parameter, and $p_n$ is an amplitude of the element $G_{t_1,t_2,n}$ in a codeword block.

**12.** The method according to claim 4, wherein the codeword element satisfies any one of:

$$G_{t_1,t_2,n} = p_n \exp\left( j2\pi\left( Qt_2 n^2 + Pt_1 n \right) \right);$$

wherein $G_{t_1,t_2,n}$ is the codeword element, $n$ is the antenna index, $t_1$ is the first parameter, $t_2$ is the second parameter, $P$ is a first preset parameter, $Q$ is a second preset parameter, and $p_n$ is an amplitude of the codeword element $G_{t_1,t_2,n}$.

**13.** The method according to claim 4, wherein the codeword element satisfies any one of:

$$G_{t_1,t_2,n} = p_n \exp\left( j2\pi\left( Qt_2 \left(1-4P^2 t_1^2\right) n^2 + Pt_1 n \right) \right),$$

$$G_{t_1,t_2,n} = p_n \exp\left( j2\pi\left( 8PQ^2 \left(1-4P^2 t_1^2\right) t_1 t_2^2 n^3 + Qt_2 \left(1-4P^2 t_1^2\right) n^2 + Pt_1 n \right) \right),$$

$$G_{t_1,t_2,n} = p_n \exp\left( j2\pi\left( 4Q^3 \left(20P^2 t_1^2 - 1\right)\left(1-4P^2 t_1^2\right) t_2^3 n^4 + 8PQ^2 \left(1-4P^2 t_1^2\right) t_1 t_2^2 n^3 + Qt_2 \left(1-4P^2 t_1^2\right) n^2 + Pt_1 n \right) \right);$$

wherein $G_{t_1,t_2,n}$ is the codeword element, $n$ is the antenna index, $t_1$ is the first parameter, $t_2$ is the second parameter, $P$ is a first preset parameter, $Q$ is a second preset parameter, and $p_n$ is an amplitude of the element $G_{t_1,t_2,n}$ in a codeword block.

14. The method according to claim 4, wherein the codeword element satisfies any one of:

$$G_{t_1,t_2,n} = p_n \exp\left( j\frac{2\pi}{\lambda}\left( Qt_2\left(1-P^2t_1^2\right)n^2d^2 + Pt_1nd \right) \right),$$

$$G_{t_1,t_2,n} = p_n \exp\left( j\frac{2\pi}{\lambda}\left( Qt_2 n^2d^2 + Pt_1nd \right) \right),$$

$$G_{t_1,t_2,n} = p_n \exp\left( j\frac{2\pi}{\lambda}\left( 2PQ^2t_1\left(1-P^2t_1^2\right)t_2^2n^3d^3 + Qt_2\left(1-P^2t_1^2\right)n^2d^2 + Pt_1nd \right) \right),$$

$$G_{t_1,t_2,n} = p_n \exp\left( j\frac{2\pi}{\lambda}\left( 2PQ^2t_1\left(1-P^2t_1^2\right)t_2^2n^3d^3 + Qt_2\left(1-P^2t_1^2\right)n^2d^2 + Pt_1nd \right) \right)$$

$$\times \exp\left( j\frac{2\pi}{\lambda}\left( Q^3\left(5P^2t_1^2-1\right)\left(1-P^2t_1^2\right)t_2^3n^4d^4 \right) \right)$$

wherein $G_{t_1,t_2,n}$ is the codeword element, $n$ is the antenna index, $t_1$ is the first parameter, $t_2$ is the second parameter, $P$ is a first preset parameter, $Q$ is a second preset parameter, $p_n$ is an amplitude of the codeword element $G_{t_1,t_2,n}$, and $d$ is an array unit spacing.

15. The method according to claim 2, wherein the codeword element satisfies any one of:

$$G_{t_1,t_2,n} = p_n \exp\left( j2\pi\left( \frac{\left(1-4P^2t_1^2\right)}{8Qt_2}n^2 + Pt_1n \right) \right),$$

$$G_{t_1,t_2,n} = p_n \exp\left( j2\pi\left( \frac{1}{8Qt_2}n^2 + Pt_1n \right) \right),$$

$$G_{t_1,t_2,n} = p_n \exp\left( j2\pi\left( \frac{Pt_1\left(1-4P^2t_1^2\right)}{16Q^2t_2^2}n^3 + \frac{\left(1-4P^2t_1^2\right)}{8Qt_2}n^2 + Pt_1n \right) \right),$$

$$G_{t_1,t_2,n} = p_n \exp\left( j2\pi\left( \frac{\left(20P^2t_1^2-1\right)\left(1-4P^2t_1^2\right)}{128Q^3t_2^3}n^4 + \frac{Pt_1\left(1-4P^2t_1^2\right)}{16Q^2t_2^2}n^3 + \frac{\left(1-4P^2t_1^2\right)}{8Qt_2}n^2 + Pt_1n \right) \right);$$

wherein $G_{t_1,t_2,n}$ is an element in a codeword block, $n$ is the antenna index, $t_1$ is the first parameter, $t_2$ is the second parameter, $P$ is a first preset parameter, $Q$ is a second preset parameter, and $p_n$ is an amplitude of the element $G_{t_1,t_2,n}$ in the codeword block.

16. The method according to claim 2, wherein the codeword element satisfies any one of:

$$G_{t_1,t_2,n} = p_n \exp\left( j\frac{2\pi}{\lambda}\left( \frac{\left(1-P^2 t_1^2\right)}{2Qt_2} n^2 d^2 + Pt_1 nd \right) \right),$$

$$G_{t_1,t_2,n} = p_n \exp\left( j\frac{2\pi}{\lambda}\left( \frac{1}{2Qt_2} n^2 d^2 + Pt_1 nd \right) \right),$$

$$G_{t_1,t_2,n} = p_n \exp\left( j\frac{2\pi}{\lambda}\left( \frac{Pt_1\left(1-P^2 t_1^2\right)}{2Q^2 t_2^2} n^3 d^3 + \frac{\left(1-P^2 t_1^2\right)}{2Qt_2} n^2 d^2 + Pt_1 nd \right) \right),$$

$$G_{t_1,t_2,n} = p_n \exp\left( j\frac{2\pi}{\lambda}\left( \frac{Pt_1\left(1-P^2 t_1^2\right)}{2Q^2 t_2^2} n^3 d^3 + \frac{\left(1-P^2 t_1^2\right)}{2Qt_2} n^2 d^2 + Pt_1 nd \right) \right) \times \exp\left( j\frac{2\pi}{\lambda}\left( \frac{\left(5P^2 t_1^2 -1\right)\left(1-P^2 t_1^2\right)}{8Q^3 t_2^3} n^4 d^4 \right) \right);$$

wherein $G_{t_1,t_2,n}$ is the codeword element, $n$ is the antenna index, $t_1$ is the first parameter, $t_2$ is the second parameter, $P$ is a first preset parameter, Q is a second preset parameter, and $p_n$ is an amplitude of the codeword element $G_{t_1,t_2,n}$.

17. The method according to claim 16, wherein a codeword block in the codeword satisfies relations as follows:

$$G = \left( G_{t_1,t_2} \right) \otimes \left( G'_{t_1',t_2'} \right),$$

$$G_{t_1,t_2} = \left[ G_{t_1,t_2,n_1} \quad G_{t_1,t_2,n_2} \quad \cdots \quad G_{t_1,t_2,n_{N_1}} \right],$$

$$G'_{t_1',t_2'} = \left[ G_{t_1',t_2',n_1'} \quad G_{t_1',t_2',n_2'} \quad \cdots \quad G_{t_1',t_2',n_{N_1'}'} \right].$$

wherein $G$ is the codeword block in the codeword, $G_{t_1,t_2,n}$ is a first codeword block, $G'_{t_1',t_2'}$ is a second codeword block, $N_1$ and $N_1'$ are both a number of elements, $\otimes$ represents a Kronecker product operation, $G_{t_1,t_2} \in C^{N_1 \times 1}, G_{t_1',t_2'} \in C^{N_1' \times 1}$, $t_1$ is the first parameter of the first codeword block $G_{t_1,t_2}$, $t_2$ is the second parameter of the first codeword block $G_{t_1,t_2}$; $t_1'$ is the first parameter of the second codeword block $G_{t_1',t_2'}$, and $t_2'$ is the second parameter of the second codeword block $G_{t_1',t_2'}$.

18. The method according to claim 17, wherein a value of $t_1$ is determined based on a value of $t_2$, a value of $t_1'$, and a value of $t_2'$; and/or, a value of $t_2$ is determined based on a value of $t_1$, a value of $t_1'$, and a value of $t_2'$; and/or, a value of $t_1'$ is determined based on a value of $t_1$, a value of $t_2$, and a value of $t_2'$; and/or, a value of $t_2'$ is determined based on a value of $t_1$, a value of $t_2$, and a value of $t_1'$.

19. The method according to claim 18, wherein values of $t_1$, $t_2$, $t_1'$ and $t_2'$ are determined based on three preset feedback parameters $s_1$, $s_2$ and $S_3$ which are independent from each other.

20. The method according to claim 2, wherein a modulus of a codeword element in the codeword block is determined based on at least one of a power control parameter, a position parameter, a channel measurement parameter, and a configuration parameter from a receiving end to a transmitting end.

21. A communication apparatus, **characterized by** comprising: a processor and a memory for storing instructions executable by the processor;
wherein the processor is configured to execute the instructions, so that the communication apparatus performs the channel information feedback method according to claims 1 to 20.

22. A computer readable storage medium, **characterized in that** the computer readable storage medium has stored computer instructions thereon, the computer instructions, when executed on a communication apparatus, cause the communication apparatus to perform the channel information feedback method according to any one of claims 1 to 20.

Communication
system 10

Network
device 101

Terminal
device 102

FIG. 1

| Receiving end | Sending end |
|---|---|

S101, Acquire channel information

S102, According to the channel
information, determine a target
codeword from a codebook set
indicated by the channel information

S103, Send an indication
parameter

Determine the target codeword
according to the indication parameter

FIG. 2

Communication apparatus 300

Transceiving module 301

Processing module 302

FIG. 3

400

402

403

404

Processor

Communication interface

Bus

Memory

401

FIG. 4

## INTERNATIONAL SEARCH REPORT

International application No.

**PCT/CN2023/139647**

### A. CLASSIFICATION OF SUBJECT MATTER

H04B 7/0456(2017.01)i

According to International Patent Classification (IPC) or to both national classification and IPC

### B. FIELDS SEARCHED

Minimum documentation searched (classification system followed by classification symbols)

IPC: H04B H04W H04L

Documentation searched other than minimum documentation to the extent that such documents are included in the fields searched

Electronic data base consulted during the international search (name of data base and, where practicable, search terms used)

CNTXT, ENTXTC, ENTXT, VEN, 3GPP: 码本, 码字, 码字块, 预编码, 信道信息, 信道状态, 反馈, 指示, 多, 天线, TRP, 多项式, 索引, 幂, 次, 参数, codebook, code, word, precoding, channel, state, CSI, feedback, indicate, multi+, antenna, polynomial, multinomial, index, power, order, parameter

### C. DOCUMENTS CONSIDERED TO BE RELEVANT

| Category* | Citation of document, with indication, where appropriate, of the relevant passages | Relevant to claim No. |
|---|---|---|
| X | CN 114257341 A (ZTE CORP.) 29 March 2022 (2022-03-29) description, paragraphs 229-438 | 1, 21-22 |
| A | CN 114257341 A (ZTE CORP.) 29 March 2022 (2022-03-29) description, paragraphs 229-438 | 2-20 |
| A | CN 106911373 A (ZTE CORP.) 30 June 2017 (2017-06-30) entire document | 1-22 |
| A | CN 107241125 A (BEIJING XINWEI TELECOM TECHNOLOGY INC.) 10 October 2017 (2017-10-10) entire document | 1-22 |
| A | US 2012039402 A1 (SAMSUNG ELECTRONICS CO., LTD.) 16 February 2012 (2012-02-16) entire document | 1-22 |
| A | FUJITSU. "Discussion on CSI Acquisition for Massive MIMO in NR" *3GPP TSG RAN WG1 Meeting #86 R1-166677*, 26 August 2016 (2016-08-26), entire document | 1-22 |

☐ Further documents are listed in the continuation of Box C.　　☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **21 February 2024** | **28 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/139647**

| Patent document cited in search report | | | Publication date (day/month/year) | Patent family member(s) | | | Publication date (day/month/year) |
|---|---|---|---|---|---|---|---|
| CN | 114257341 | A | 29 March 2022 | CA | 2899660 | A1 | 27 November 2014 |
| | | | | WO | 2014187146 | A1 | 27 November 2014 |
| | | | | CN | 104184560 | A | 03 December 2014 |
| | | | | AU | 2014271098 | A1 | 06 August 2015 |
| | | | | MX | 2015009961 | A1 | 29 September 2015 |
| | | | | EP | 2955869 | A1 | 16 December 2015 |
| | | | | KR | 20160013515 | A | 04 February 2016 |
| | | | | US | 2016065289 | A1 | 03 March 2016 |
| | | | | IN | 201504674 | P4 | 01 July 2016 |
| | | | | ID | 201703111 | A | 31 March 2017 |
| | | | | RU | 2616156 | C1 | 12 April 2017 |
| | | | | BR | 112015018475 | A2 | 18 July 2017 |
| | | | | CN | 110830165 | A | 21 February 2020 |
| | | | | JP | 2016511571 | A | 14 April 2016 |
| CN | 106911373 | A | 30 June 2017 | WO | 2017107671 | A1 | 29 June 2017 |
| CN | 107241125 | A | 10 October 2017 | None | | | |
| US | 2012039402 | A1 | 16 February 2012 | KR | 20120014859 | A | 20 February 2012 |

Form PCT/ISA/210 (patent family annex) (July 2022)

## REFERENCES CITED IN THE DESCRIPTION

**Patent documents cited in the description**

- CN 202211697546